Europäisches Patentamt

European Patent Office

Office européen des brevets

(11) Numéro de publication: **0 310 466 B1**

(12) **FASCICULE DE BREVET EUROPEEN**

(45) Date de publication de fascicule du brevet: **21.10.92**  (51) Int. Cl.⁵: **G05D 7/06**

(21) Numéro de dépôt: **88402173.4**

(22) Date de dépôt: **26.08.88**

(54) **Dispositif perfectionné de commande proportionnelle amplifiée en débit.**

(30) Priorité: **29.09.87 FR 8713449**

(43) Date de publication de la demande:
**05.04.89 Bulletin 89/14**

(45) Mention de la délivrance du brevet:
**21.10.92 Bulletin 92/43**

(84) Etats contractants désignés:
**DE GB IT**

(56) Documents cités:
**EP-A- 0 182 053**
**EP-A- 0 233 166**
**DE-A- 3 532 249**

**PATENT ABSTRACTS OF JAPAN, vol. 11, no. 28 (M-557)[2475], 27 janvier 1987, page 78 M 557;& JP-A-61 200 061**

**PATENT ABSTRACTS OF JAPAN, vol. 8, no. 76 (M-228)[1513], 9 avril 1984, page 106 M 288;& JP-A-58 221 769**

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **Camus, Gérard**
**15, rue des Bouchères**
**F-95240 Cormeilles en Parisis(FR)**

(74) Mandataire: **Durand, Yves Armand Louis et al**
**CABINET WEINSTEIN 20, Avenue de Friedland**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

L'invention concerne essentiellement un dispositif perfectionné de commande proportionnelle amplifiée en débit, destiné plus particulièrement à alimenter en fluide sous pression un dispositif de commande de direction d'un véhicule automobile.

Une telle commande proportionnelle amplifiée en débit se compose généralement d'un premier circuit dit de pilotage constitué d'un tiroir, qui par l'action d'un élément extérieur de commande, par exemple d'un système à électro-aimant, est susceptible de mettre en communication différents conduits, tels que par exemple un conduit d'admission, un conduit d'échappement et un conduit de sortie afin de réaliser la circulation d'un fluide sous pression.

Cependant, l'élément extérieur de commande ne peut mettre en mouvement, à cause de sa puissance limitée, qu'un tiroir de faible section dont les performances en débit sont insuffisantes.

Ainsi, un deuxième circuit comportant un distributeur constitué d'un tiroir d'une section plus importante est disposé en aval du circuit de pilotage.

Ce deuxième circuit est constitué comme le premier de conduits d'admission, d'échappement et de sortie et est piloté par le premier circuit par l'intermédiaire d'une chambre dite de pilotage.

Dans ce genre de dispositif, le tiroir du circuit de pilotage est équilibré par l'action de la pression régnant dans la chambre de pilotage qui créé sur ce tiroir un effort antagoniste à l'effort fourni par l'élément extérieur de commande.

Cet équilibre permet au tiroir du circuit de pilotage de générer dans la chambre de pilotage une pression proportionnelle à l'action de l'élément extérieur de commande.

A chaque pression de l'élément extérieur de commande, le tiroir du circuit de pilotage recherche une nouvelle position d'équilibre après avoir débité dans la chambre de pilotage.

Cependant, le volume de cette chambre étant faible et le tiroir ne pouvant contrôler qu'un débit minimum, des variations de pression trop importantes perturbent l'équilibre du tiroir qui vibre et se met à battre. Pour diminuer ces vibrations, on a bridé le dispositif par l'intermédiaire d'un laminage hydraulique, mais ceci provoque des pertes de débit dynamique.

Il a de même été suggéré de créer une stabilisation en utilisant un système de fuites disposé à la sortie du distributeur du circuit de pilotage. Toutefois, ces fuites consomment de l'énergie et sont donc peu. appropriées.

Par ailleurs, le document FR-A-2 514 853 décrit un dispositif de pilotage correspondant au préambule de la revendication 1. Un tel dispositif ne permet pas de stabiliser le tiroir du circuit de pilotage sans consommer de débit et en améliorant la sensibilité du circuit de puissance.

Aussi, l'invention propose de résoudre les inconvénients énoncés plus haut, grâce aux caractéristiques décrites dans la partie caractérisante de la revendication 1.

A cet effet, l'invention a pour objet un dispositif perfectionné de commande proportionnelle amplifiée en débit de fluide, et du type comprenant un circuit de pilotage constitué par un tiroir commandé mécaniquement par un électro-aimant et susceptible de mettre en communication des conduits d'admission, d'échappement et de sortie dudit fluide vers une chambre de pilotage de façon à commander au moins un circuit de puissance constitué par un tiroir susceptible de mettre en communication des conduits d'admission, d'échappement et de sortie, vers l'utilisation dudit fluide, caractérisé en ce que les conduits de sortie du circuit de pilotage et du circuit de puissance sont reliés par un circuit de liaison apte à assurer la stabilisation du tiroir du circuit de pilotage.

On comprend donc que l'on réalise ainsi un dispositif de commande où l'interaction entre le circuit de pilotage et le circuit de puissance permet de récupérer au niveau du débit d'utilisation le volume de fluide régulé du circuit de pilotage.

Suivant une autre caractéristique de l'invention, le circuit de liaison comporte un régulateur de débit.

On précisera encore ici que le régulateur de débit est constitué par des gicleurs calibrés interchangeables.

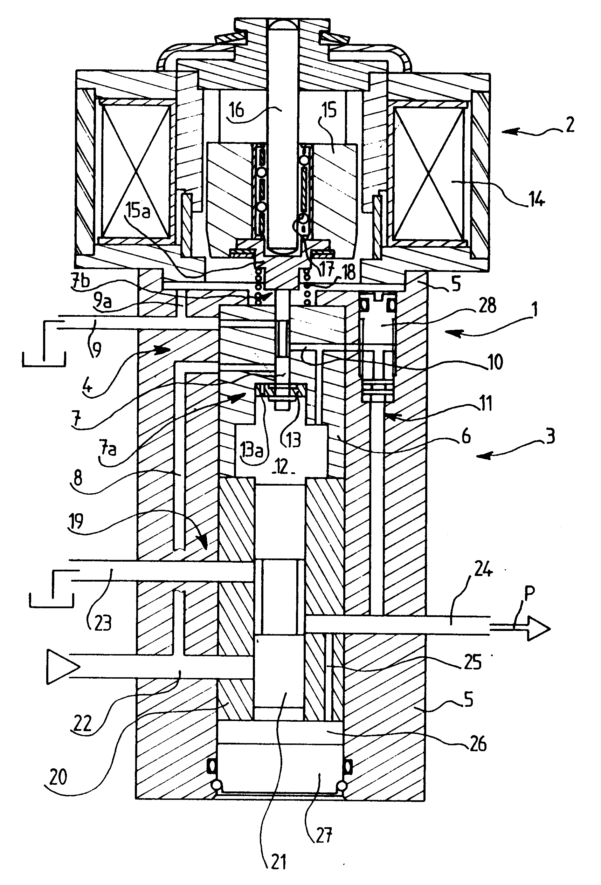

Mais d'autres caractéristiques et avantages de l'invention apparaîtront mieux dans la description détaillée qui suit et se réfère au dessin unique annexé, donné uniquement à titre d'exemple, et qui est une vue en coupe longitudinale d'un dispositif perfectionné conforme à cette invention.

En se reportant à cette figure, un dispositif perfectionné de commande proportionnelle amplifiée en débit conforme à cette invention, comprend un circuit de pilotage 1, commandé mécaniquement par un moyen de commande 2, par exemple par un système à électro-aimant 2, et qui pilote un circuit de puissance 3.

Le circuit de pilotage 1 comporte un distributeur 4 logé dans un corps principal 5 qui est constitué d'une chemise 6, ajustée serrée dans le corps principal 5 et recevant un tiroir 7 coulissant dans cette chemise.

Le circuit de pilotage 1 est constitué en outre d'un conduit d'admission 8 alimentant le distributeur 4 en fluide sous pression, d'un conduit d'échappement 9, les conduits 8 et 9 étant pratiqués dans le corps principal 5 et se prolongeant dans la chemise 6, et d'un conduit de sortie 10 pratiqué dans la chemise 6 et débouchant, d'une part, dans un conduit de liaison 11 et d'autre part dans une chambre de pilotage 12.

Le tiroir 7 en se translatant dans la chemise 6 met en communication les conduits 8, 9 et 10 afin de permettre la circulation du fluide sous pression.

Un canal 9a débouchant dans le conduit de sortie 9, récupère le fluide qui s'échappe du tiroir 7.

Ce tiroir 7 comporte par ailleurs à une extrémité 7a un plateau 13, évoluant dans la chambre de pilotage 12 et maintenu en translation entre deux butées fixées sur le tiroir 7.

La fonction de ce plateau sera expliquée de façon détaillée ci-après.

Le tiroir 7 est commandé mécaniquement en translation à son autre extrémité 7b par le moyen de commande 2, maintenu à une extrémité 5a du corps 5. Ce moyen de commande 2 comporte un système à électro-aimant 2 constitué d'une bobine 14 actionnant un noyau 15 supporté par un arbre 16.

Ce noyau 15 est monté coulissant sur l'arbre 16 grâce à un palier 17 et comporte une partie d'extrémité 15a en appui d'une part contre une extrémité de l'arbre 16 et d'autre part contre l'extrémité 7b du tiroir 7. Un ressort de rappel 18, est disposé entre un épaulement de la partie d'extrémité 15a et une face de la chemise B.

Le circuit de puissance 3 comporte un distributeur 19 constitué d'une chemise 20 recevant de façon coulissante un tiroir 21, d'un conduit d'admission 22, alimentant le distributeur en fluide sous pression, d'un conduit d'échappement 23, et d'un conduit de sortie 24 fournissant une pression P d'utilisation. Ces trois conduits sont pratiqués d'une part dans le corps principal 5 et se prolongent d'autre part dans la chemise 20.

Le tiroir 21, en se déplaçant, met en communication les trois conduits 22, 23 et 24 afin de permettre la circulation du fluide sous pression et afin de contrôler la pression P d'utilisation disponible débitée par le conduit de sortie 24.

Le conduit de sortie 24 communique avec un conduit 25 débouchant dans une chambre de réaction 26 formée entre un élément d'obturation 27 et une face de la chemise 20.

Le conduit de sortie 24 du circuit de puissance 3 est relié au conduit de sortie 10 du circuit de pilotage 1 par l'intermédiaire du conduit de liaison 11.

Ce conduit de liaison 11 comporte un régulateur de débit 28 disposé dans le corps principal 5 et composé d'un ensemble de gicleurs calibrés pouvant être interchangés pour moduler la régulation du circuit de pilotage 1.

Le fonctionnement du dispositif est le suivant.

Le moyen de commande 2, sollicité, actionne en translation le tiroir 7 qui met en communication les conduits d'admission 8 et de sortie 10 du circuit de pilotage 1 alimentant en fluide sous pression la chambre de pilotage 12.

La pression régnant dans la chambre de pilotage 12 agit sur le plateau 13 et oppose à l'action du moyen de commande 2 une force antagoniste de réaction.

Le plateau 13 qui comporte un orifice 13a créé un laminage amortissant les mouvements du tiroir 7.

Lorsque cette force de réaction devient supérieure à l'action du moyen de commande 2, le tiroir 7 retourne vers sa position initiale pour mettre en communication le conduit de sortie 10 avec le conduit d'échappement 9, ce qui diminue la pression régnant dans la chambre 12 en évacuant le fuide en excès.

Par conséquent, le tiroir 7 recherche une position d'équilibre entre les orifices 8 et 9 jusqu'à fournir à la chambre 12 une pression proportionnelle à l'action du moyen de commande 2.

Pendant ce temps, le tiroir 21 du circuit de puissance 3 a quitté sa position initiale pour mettre en communication les conduits d'admission 22 et de sortie 24.

Le conduit de sortie 24 débitant dans la chambre de réaction 26 par l'intermédiaire du conduit 25 fournit à la chambre 26 une pression créant un effort antagoniste de réaction sur le tiroir 21.

Le tiroir 21 se déplace donc vers le conduit d'échappement 23, cherchant une position d'équilibre entre les conduits 22 et 23 de sorte que les pressions dans les chambres 26 et 12 soient équivalentes, entraînant une proportionnalité entre la pression d'utilisation fournie par le conduit de sortie 24 du circuit de puissance 3 et l'action du moyen de commande 2.

Le conduit 11, qui relie le conduit de sortie 10 du circuit de pilotage 1 au conduit de sortie 24 du circuit de puissance 3, assure la stabilisation du tiroir de pilotage 7 en absorbant la quantité de fluide débitée par le conduit de sortie 10 et qui est nécessaire à la stabilisation.

Le régulateur 28, formé par des gicleurs calibrés, assure le réglage de la régulation.

Par ailleurs, les faibles variations de pression créées sur le tiroir 21 du circuit de puissance 3 sont compensées par le circuit de pilotage 1 et le conduit de liaison 11 avant que le tiroir 21 du circuit de puissance 3 ne se mette en mouvement.

Ainsi, on comprend que cette interaction entre les circuits de pilotage et de puissance permet d'une part de stabiliser le circuit de pilotage sans consommer de débit, et d'autre part d'améliorer la sensibilité du circuit de puissance.

**Revendications**

1. Dispositif de commande proportionnelle amplifiée en débit de fluide du type comprenant un circuit de pilotage (1) dans lequel un tiroir (7) commandé mécaniquement par un électro-aimant (2) est susceptible de mettre en communication des conduits d'admission (8), d'échappement (9) et de sortie (10) dudit fluide vers une chambre de pilotage (12) de façon à commander un circuit de puissance (3) comportant un tiroir (21) susceptible de mettre en communication des conduits d'admission (22), d'échappement (23) et de sortie (24) vers l'utilisation dudit fluide, caractérisé en ce que les conduits de sortie (10, 24) du circuit de pilotage (1) et du circuit de puissance (3) sont reliés par un circuit de liaison (11) apte à assurer la stabilisation du tiroir du circuit de pilotage.

2. Dispositif selon la revendication 1, caractérisé en ce que le circuit de liaison (11) comporte un régulateur de débit (28).

3. Dispositif selon la revendication 2, caractérisé en ce que le régulateur de débit précité (28) est constitué par un ensemble de gicleurs calibrés interchangeables.

**Claims**

1. Device for the amplified proportionnal control of a flow rate of the type comprising a control circuit (1) in which a spool (7) mechanically operated by an electromagnet (2) is susceptible of putting in communication an inlet duct (8), an exhaust duct (9) and an outlet duct (10) of the said fluid towards a control chamber (12) so as to operate a power circuit (3) comprising a spool (21) susceptible of putting in communication an inlet duct (22), an exhaust duct (23) and an outlet duct (24) towards the utilization of the said fluid, characterized in that the said outlet ducts (10, 24) of the control circuit (1) and of the power circuit (3) are connected by a connecting circuit (11) adapted to ensure the stabilization of the spool of the control circuit.

2. Device according to claim 1, characterized in that the connecting circuit (11) comprises a flow rate regulator (28).

3. Device according to claim 2, characterized in that the aforesaid flow rate regulator (28) is constituted by a system of interchangeable calibrated spray nozzles.

**Patentansprüche**

1. Vorrichtung zur verstärkten proportionalen Steuerung der Durchsatzmenge eines fliessfähigen Mediums, derjenigen Gattung mit einem Steuerkreislauf (1) in welchem ein mechanisch durch einen Elektromagneten (2) betätigter Schieber (7) fähig ist, einen Einlasskanal (8), einen Entweichungskanal (9) und einen Auslasskanal (10) des besagten fliessfähigen Mediums zu einer Steuerkammer (12) hin in Verbindung zu setzen, um einen einen Schieber (21), der fähig ist, einen Einlasskanal (22), einen Entweichungskanal (23) und einen Auslasskanal (24) zur Verwendung des besagten fliessfähigen Mediums hin aufweisenden Leistungskreislauf (3) zu steuern, dadurch gekennzeichnet, dass die Auslasskanäle (10, 24) des Steuerkreislaufes (1) und des Leistungskreislaufes (3) durch einen Verbindungskreislauf (11), der fähig ist, die Stabilisierung des Schiebers des Steuerkreislaufes zu gewährleisten, verbunden sind.

2. Vorrichtung nach Anspruch 1, dadurch gekennzeichnet, dass der Verbindungskreislauf (11) einen Durchsatzmengenregler (28) aufweist.

3. Vorrichtung nach Anspruch 2, dadurch gekennzeichnet, dass der vorgenannte Durchsatzmengenregler (28) durch eine Anordnung von auswechselbaren kalibrierten Spritzdüsen gebildet wird.